# FASCICULE DE BREVET EUROPEEN

(11) **EP 4 101 944 B1**
(45) Date de publication et mention de la délivrance du brevet: **28.08.2024**
(21) Numéro de dépôt: 22177625.5
(22) Date de dépôt: 07.06.2022
(51) Int. Cl.: C23F 13/02, C23F 13/06, C02F 1/46

(54) **DISPOSITIF DE PROTECTION CATHODIQUE D'UNE STRUCTURE MÉTALLIQUE CONTRE LA CORROSION**
VORRICHTUNG ZUM KATHODISCHEN SCHUTZ EINER METALLSTRUKTUR GEGEN KORROSION
DEVICE FOR CATHODIC PROTECTION OF A METAL STRUCTURE AGAINST CORROSION

(30) Priorité: 08.06.2021 FR 2106008
(43) Date de publication de la demande: 14.12.2022
(73) Titulaire: CORROHM, 31520 Ramoniville Saint Agne (FR); Institut National des Sciences Appliquées de Toulouse, 31077 Toulouse Cedex 4 (FR); Institut National Polytechnique de Toulouse, 31029 Toulouse (FR); Centre national de la recherche scientifique, 75016 Paris (FR); Université Toulouse III-Paul Sabatier, 31062 Toulouse Cedex 9 (FR)
(72) Inventeur: GARCIA, David, 31520 Ramonville-Saint-Agne (FR); DUBUIT, Julie, 31520 Ramonville-Saint-Agne (FR); BERTRON, Alexandra, 31077 Toulouse Cedex 4 (FR); LAURENS, Stéphane, 31077 Toulouse Cedex 4 (FR); ERABLE, Benjamin, 31432 Toulouse cedex 4 (FR); ETCHEVERRY, Luc, 31432 Toulouse cedex 4 (FR)
(74) Mandataire: Ipside

(56) Documents cités:
- CN-A- 110 257 832
- CN-A- 111 534 822
- JP-B2- 6 071 053
- US-A1- 2012 234 692
- US-A1- 2020 087 799
- US-B2- 9 365 936
- KUNG CHIH-CHIEN ET AL: "Innovative microbial fuel cell for energy harvesting and corrosion protection", ENERGY HARVESTING AND STORAGE: MATERIALS, DEVICES, AND APPLICATIONS II, SPIE, 1000 20TH ST. BELLINGHAM WA 98225-6705 USA, vol. 8035, no. 1, 13 May 2011 (2011-05-13), pages 1 - 11, XP060015079, DOI: 10.1117/12.886565
- SHAMSUDDIN RABA'ATUN ADAWIYAH ET AL: "Can electrochemically active biofilm protect stainless steel used as electrodes in bioelectrochemical systems in a similar way as galvanic corrosion protection?", INTERNATIONAL JOURNAL OF HYDROGEN ENERGY, ELSEVIER, AMSTERDAM, NL, vol. 44, no. 58, 16 April 2019 (2019-04-16), pages 30512 - 30523, XP085898880, ISSN: 0360-3199, [retrieved on 20190416], DOI: 10.1016/J.IJHYDENE.2019.03.089

## Description

### Domaine technique de l'invention

L'invention relève des dispositifs/procédés de protection de structures métalliques contre la corrosion. Elle s'inscrit dans le domaine des protections cathodiques, et concerne plus particulièrement un dispositif et un procédé de protection cathodique contre la corrosion d'une structure métallique en contact avec un milieu électrolytique.

### Technique antérieure

La corrosion constitue la première cause de dégradation accélérée des structures métalliques en contact direct avec un environnement électrolytique. Au rang des solutions préventives et curatives associées à cette pathologie, la protection cathodique se développe depuis de nombreuses années dans tous les secteurs industriels concernés par ce problème.

Le principe de base de la protection cathodique consiste simplement à fournir des électrons en quantité suffisante au métal à protéger. La quantité d'électrons à fournir dépend de plusieurs facteurs, tels que :
- la cinétique et le faciès de corrosion du métal, mesurés ou supposés,
- le contexte environnemental du métal à protéger, aux sens physique, chimique et mécanique, etc...

Les électrons nécessaires sont fournis par le biais d'un dispositif ou système dit « anodique ». Selon le type de système anodique, on distingue aujourd'hui deux grandes familles de techniques de protection cathodique.

La première famille correspond à la protection cathodique par courant galvanique (PCCG). Cette protection implique un système anodique qui est constitué par un métal sacrificiel moins noble que le métal à protéger (par exemple zinc ou magnésium pour la protection des structures en acier au carbone). Un couplage galvanique entre le métal à protéger et le métal sacrificiel est réalisé. Ce couplage est favorable au métal à protéger puisque le métal sacrificiel (moins noble) se consomme par corrosion galvanique et alimente ainsi le métal à protéger en électrons. L'énergie est fournie naturellement (i.e. spontanément) par la consommation (par corrosion) du métal sacrificiel au bénéfice du métal à protéger. La durée de vie du système de protection est conditionnée par la quantité de métal sacrificiel mise en oeuvre et par la vitesse de consommation de ce dernier. La prolongation de la durée de vie d'un tel système de protection nécessite un réapprovisionnement périodique en métal sacrificiel. Les inconvénients de cette solution de protection résident dans la consommation de ressources métalliques naturelles (consommable métallique) et le relargage d'oxydes métalliques dans l'environnement.

Un exemple de PCCG est donné dans la demande de brevet JP 6 071053 B2 qui divulgue un dispositif de protection cathodique d'un matériau métallique d'une structure en contact avec de l'eau comprenant au moins une anode sacrificielle disposée dans l'eau proche de la structure dont le matériau métallique est à protéger. Cette anode sacrificielle est reliée par un circuit électrique au matériau métallique de la structure et elle a une tendance à l'ionisation supérieure à celle du matériau métallique. Le dispositif de protection cathodique comporte également une seconde anode installée dans le sol anaérobie du fond de l'eau près de la structure. Cette seconde anode est connectée à l'anode sacrificielle ou au matériau métallique de la structure par le circuit électrique et par l'intermédiaire d'un dispositif redresseur qui n'est alimenté que lorsque la seconde anode est à un faible potentiel par rapport à l'anode sacrificielle ou au matériau métallique. Ainsi, l'usure de l'électrode sacrificielle peut être réduite et la durée de vie de la protection cathodique peut être prolongée. La seconde anode récupère des électrons libérés par les microorganismes présents dans le sol anaérobie et les transfère à l'anode sacrificielle ou au matériau métallique de la structure.

Un autre exemple est donné dans le brevet US 9 365 936 B2 qui divulgue un système à semi-circuit, un procédé et un appareil destiné à protéger des éléments métalliques immergés dans un fluide électrolytique contre une corrosion électrochimique. L'appareil comprend un boîtier auquel est fixée une anode sacrificielle, un cordon électriquement conducteur connecté électriquement à l'anode et un connecteur électrique permettant de connecter le cordon à une structure métallique à protéger contre la corrosion. Le boîtier peut être à flottabilité positive, ce qui permet de protéger des structures proches contre des dommages provoqués par des chocs, tout en mettant le composant anode à l'abri de la lumière du soleil, ce qui permet de réduire le taux de développement de salissures d'origine marine sur celui-ci.

Encore un autre exemple est donné dans la demande de brevet US 2012/234692 A1 qui divulgue une anode pour la protection cathodique d'un équipement sous-marin. L'anode comprend un corps de support, un matériau sacrificiel retenu par le corps de support, et un mécanisme de fixation pour fixer de manière amovible l'anode à l'équipement sous-marin. Le corps de support peut comprendre des moyens de flottaison pour permettre une sélection de la densité de l'anode et ainsi permettre une manipulation facilitée de cette dernière dans des grandes profondeurs sous-marines.

La deuxième famille correspond à la protection cathodique par courant imposé (PCCI). Dans cette protection le système anodique est constitué par un métal ou un complexe métallique inerte, généralement plus noble que le métal à protéger. Les électrons ne sont pas fournis ici par l'oxydation d'un métal, mais par une réaction électrochimique se produisant à l'interface entre le milieu électrolytique et le système anodique. Ce processus n'étant pas spontané, un générateur de courant continu (transformateur-redresseur) et son raccordement au réseau de distribution électrique sont nécessaires pour forcer le transport des électrons vers le métal à protéger. L'énergie est donc fournie par une connexion permanente au réseau de distribution électrique tout au long de la durée de vie du système de protection. La durée de vie d'un système de PCCI est en théorie plus élevée qu'un système de PCCG. L'inconvénient des solutions de PCCI réside dans la consommation électrique nécessaire pour fournir en continu des électrons au métal à protéger.

La protection cathodique d'une structure métallique représente un coût financier important lié à des processus de mise en oeuvre in situ assez lourds et complexes, aux matières premières consommées (en particulier dans le cas des métaux sacrificiels utilisés en PCCG) ou encore à un raccordement au réseau de distribution électrique tout au long de la durée de vie du système dans le cas de la PCCI. Pour cette raison, la mise en oeuvre d'une protection cathodique demeure relativement limitée aux cas :
- de structures métalliques sensibles pour lesquelles il n'existe pas d'autre solution efficiente,
- de structures métalliques spécifiques pour lesquelles la protection cathodique est requise de façon normative.

Il apparait donc nécessaire aujourd'hui de trouver une solution de protection cathodique plus économique et écologique.

Certains dispositifs de protection cathodique s'affranchissent de matériaux sacrificiels et de connexion à un réseau de distribution électrique.

Par exemple, la demande de brevet CN 111 534 822 A décrit un dispositif de protection cathodique d'équipement en haute mer, ledit dispositif de protection cathodique comprenant un équipement en haute mer, un support de fond disposé sous l'équipement de haute mer et une ou plusieurs bio-anode(s) disposée(s) sous le support de fond. La bio-anode est formée de balais en carbone qui sont en contact avec des bactéries génératrices d'électricité et ladite bio-anode est en partie insérée dans les sédiments du fond marin. La bio-anode est reliée à l'équipement de haute mer par un câble et les bactéries génératrices d'électricité réagissent avec les sédiments du fond marin pour assurer la protection cathodique de l'équipement. Lorsque l'équipement de haute mer atterrit sur le fond marin, le support de fond soutient l'équipement de haute mer et évite le contact direct de ce dernier avec le fond marin. Insérées dans les sédiments marins, les bactéries productrices d'électricité sur la bio-anode de carbone peuvent utiliser en permanence la matière organique dégradable des sédiments marins pour fournir en permanence un courant de protection cathodique à l'équipement de haute mer.

UN autre exemple se trouve dans la demande de brevet CN 110 257 832 A divulgue un dispositif bio-électrochimique de protection cathodique d'un pipeline enterré dans des sédiments permettant de s'affranchir d'anode sacrificielle. Le pipeline joue le rôle de cathode du dispositif et ledit dispositif comporte une anode sous forme d'enveloppe autour du pipeline, l'anode et la cathode étant séparées par un milieu d'échange de protons telle qu'une membrane d'échange de protons. L'anode et la cathode sont connectées par un circuit externe. L'anode est enrichie avec des microorganismes électrogènes capable de dégrader de la matière organique et de fournir des électrons à l'anode qui sont alors transmis à la cathode via le circuit externe, protégeant ainsi la cathode contre la corrosion. Les protons générés au niveau de l'anode et des microorganismes sont transmis à la cathode via le milieu d'échange de protons. Les microorganismes utilisés pour enrichir l'anode sont de préférences les microorganismes présents dans les sédiments dans lesquels le pipeline et le dispositif sont enterrés.

De tels dispositif sont plus économiques et écologiques que ceux des familles PCCI et PCCG, cependant il conviendrait d'en améliorer ces deux aspects afin d'éviter d'épuiser les ressources naturelles qu'ils utilisent pour fonctionner.

### Présentation de l'invention

A cet effet, la présente invention a pour objectif de palier les inconvénients précités en proposant un dispositif de protection cathodique contre la corrosion d'au moins une structure métallique en contact avec un milieu électrolytique comprenant un sol sédimentaire, ledit dispositif de protection s'affranchissant de métal sacrificiel et de connexion à un réseau de distribution électrique et comportant :
- au moins deux systèmes anodiques microbiens comprenant chacun des microorganismes et une électrode configurée pour être en contact avec lesdits microorganismes et ledit milieu électrolytique, lesdits microorganismes ayant la capacité de fournir à l'électrode des électrons par dégradation de ressources ambiantes oxydables suivant des réactions d'oxydo-réduction, l'électrode de chaque système anodique microbien étant configurée pour être enfouie au moins en partie dans ledit sol sédimentaire du milieu électrolytique et le potentiel électrochimique libre dudit système anodique microbien étant inférieur au potentiel électrochimique libre du métal de ladite au moins une structure métallique à protéger ;
- au moins un moyen de liaison configuré pour lier chaque système anodique microbien à ladite au moins une structure métallique et configuré pour laisser circuler les électrons depuis l'électrode de chaque système anodique microbien jusqu'à ladite au moins une structure métallique ;
de sorte qu'un courant galvanique de protection s'applique à travers le milieu électrolytique depuis au moins un des systèmes anodiques microbiens jusqu'à ladite au moins une structure métallique lorsque ledit au moins un système anodique microbien est en contact avec ledit milieu électrolytique et est lié par ledit au moins un moyen de liaison à ladite au moins une structure métallique, ledit dispositif de protection étant caractérisé en ce qu'il comporte en outre :
∘ un système de mesure du courant d'électrons circulant dans chaque moyen de liaison permettant de connaitre les variations d'épuisement des ressources ambiantes oxydables qui se trouvent dans l'environnement proche du système anodique microbien auquel le moyen de liaison est lié,
∘ un système de contrôle permettant d'arrêter et activer la circulation du courant d'électrons circulant dans chaque moyen de liaison.

On entend par système anodique microbien, un système de conception proche à la partie anodique des piles microbiennes aussi appelées biopiles ou encore piles à combustible microbienne, et qui génère de l'électricité de manière autonome à partir des réactions d'oxydation réalisées par des microorganismes et connues de l'homme de l'art. Les systèmes anodiques microbiens utilisés dans la présente invention comportent chacun des microorganismes et une électrode qui joue le rôle d'anode dans le dispositif de protection de la présente invention. Cette électrode est par exemple en graphite.

Le potentiel électrochimique libre dudit système anodique microbien est inférieur au potentiel électrochimique libre du métal de ladite au moins une structure métallique à protéger. Le potentiel électrochimique libre dudit système anodique microbien dépend entre autres des microorganismes que comprend le système anodique microbien. A cet effet, les microorganismes que comprend chaque système anodique microbien sont sélectionnés parmi des microorganismes permettant au système anodique microbien d'avoir un potentiel électrochimique libre inférieur au potentiel électrochimique libre du métal de ladite au moins une structure métallique à protéger.

Les microorganismes, par exemple des bactéries, à partir des réactions d'oxydo-réduction impliquées dans la dégradation de ressources oxydables ambiantes (par exemple des molécules chimiques organiques), libérèrent des électrons qui sont transférés à l'électrode (anode), cette dernière étant reliée par le moyen de liaison à au moins une structure métallique à protéger, qui joue le rôle de cathode. Les microorganismes des systèmes anodiques microbiens de la présente invention comprennent des microorganismes présents dans le sol sédimentaire du milieu électrolytique. Le sol sédimentaire des milieux électrolytiques, préférentiellement des milieux électrolytiques naturels tels qu'une mer, un océan, un lac ou un cours d'eau, est composé de sédiments avantageusement riches en microorganismes et en substrats biodégradables (ressources oxydables) dont une partie de l'énergie disponible est transformée en électricité par les microorganismes.

On entend par milieu électrolytique tout milieu aqueux comportant des ions mobiles. Des exemples de milieux électrolytiques dans lesquels le dispositif objet de la présente invention peut être mis en oeuvre sont les mers, les océans, les cours d'eau, les effluents agricoles, les eaux usées domestiques et industrielles, les sols, les biodéchets.

Le dispositif de protection cathodique comportant plusieurs systèmes anodiques microbiens on entend par « au moins un moyen de liaison » que soit le dispositif de protection cathodique comporte un seul moyen de liaison faisant liaison entre tous les systèmes anodiques microbiens et la structure métallique, soit que le dispositif de protection cathodique comporte plusieurs moyens de liaison, et pour chaque liaison entre un système anodique microbien et la structure métallique, un moyen unique distinct de liaison est utilisé.

En présence de plusieurs structures métalliques à protéger, on entend par « au moins un moyen de liaison » que le dispositif de protection cathodique comporte un moyen de liaison distinct faisant liaison entre chaque structure métallique et lesdits au moins deux systèmes anodiques microbiens.

On entend par structure métallique toute structure comportant du métal. Des structures métalliques telles qu'utilisées dans la présente invention sont par exemple une palplanche, un pieu, un flotteur d'éolienne off-shore, une pile de pont ou de quai, un mur ou voile de soutènement, un caisson, une poutre de quai, une jetée, une barge, un élément d'infrastructure d'assainissement, tout élément de structure en béton armé, etc...

Ce système de protection permet de créer un courant galvanique de protection qui est échangé naturellement à travers le milieu électrolytique sous forme de flux ionique entre le système anodique microbien et chaque structure métallique reliée à ce dernier. La ou les structures métalliques se retrouvent donc avantageusement protégées de la corrosion.

La distance de positionnement de chaque système anodique microbien par rapport à la structure métallique à protéger est directement dépendante de la conductivité du milieu électrolytique. Plus le milieu est conducteur et plus les systèmes anodiques microbiens peuvent être placés loin de la structure métallique à protéger. A distance équivalente, un système anodique protège « une quantité » plus importante de la structure métallique à protéger lorsque la conductivité du milieu électrolytique augmente. Dans la présente invention, chaque système anodique microbien est donc placé à une distance de la structure métallique à protéger en fonction de la conductivité du milieu électrolytique de sorte à permettre la création du courant galvanique de protection à travers ledit milieu électrolytique.

Les avantages conférés par le dispositif de la présente invention sont multiples, tant du point de vue économique (pour un maître d'ouvrage) qu'environnemental. En effet, ce dispositif exploite avantageusement une source d'énergie électrique renouvelable gratuite. De plus, il n'est pas nuisible pour l'environnement puisqu'il ne met pas en oeuvre de consommable métallique ni n'engendre de relargage d'oxydes métalliques dans l'environnement contrairement à la protection cathodique impliquant un métal sacrificiel. Un autre point avantageux du point de vue environnemental est qu'il n'implique pas non plus de connexion au réseau de distribution électrique, contrairement à la protection cathodique par courant imposé. Ce dispositif est avantageusement facile à mettre en oeuvre et son coût d'installation est réduit par rapport aux systèmes de protection cathodique connus de l'art antérieur.

La présence de plusieurs systèmes anodiques microbiens au sein du dispositif de protection cathodique permet avantageusement de les utiliser de manière alternative de sorte que cela permet de ne pas épuiser les ressources oxydables ambiantes qui se trouvent dans l'environnement proche d'un système anodique microbien et que les microorganismes dudit système anodique microbien dégradent. En effet, il est ainsi possible de faire fonctionner le dispositif de protection cathodique avec un premier système anodique microbien pendant un certain temps et, lorsque il est constaté que les ressources oxydables ambiantes naturelles qui se trouvent dans l'environnement proche de ce premier système anodique microbien ont passé un certain seuil d'appauvrissement, arrêter de faire fonctionner le dispositif de protection cathodique avec ce premier système anodique microbien et le faire fonctionner avec un deuxième système anodique microbien positionné à un autre endroit que le premier système anodique microbien, le temps que l'environnement proche du premier système anodique microbien soit naturellement ou artificiellement réapprovisionné en ressources oxydables ambiantes. Il est également possible d'utiliser plusieurs systèmes anodiques microbiens en simultané.

Par analyse du courant d'électrons circulant dans un moyen de liaison, le système de mesure permet d'ailleurs avantageusement de connaitre les variations d'épuisement des ressources ambiantes oxydables qui se trouvent dans l'environnement proche d'un système anodique microbien auquel le moyen de liaison est lié. Cette analyse peut être automatisée et à cet effet, selon un mode de réalisation préféré, le dispositif de protection cathodique comporte à la place du système de mesure du courant d'électrons circulant dans chaque moyen de liaison, un système de mesure du courant d'électrons circulant dans chaque moyen de liaison et de détermination des variations d'épuisement des ressources ambiantes oxydables qui se trouvent dans l'environnement proche de chaque système anodique microbien auquel ledit au moins un moyen de liaison est lié. Le système de de mesure du courant d'électrons circulant dans chaque moyen de liaison et de détermination des variations d'épuisement des ressources ambiantes oxydables, permet ainsi de déterminer si un seuil prédéterminé d'épuisement de ressources ambiante oxydables qui se trouvent dans l'environnement proche de chaque système anodique microbien est atteint.

Le système de contrôle permet avantageusement d'arrêter ou activer la protection cathodique en respectivement arrêtant ou activant la circulation du courant d'électrons dans un moyen de liaison. En arrêtant la circulation du courant d'électrons dans un moyen de liaison, le système de contrôle permet de ne plus épuiser ou de diminuer fortement l'épuisement des ressources ambiantes oxydables qui se trouvent dans l'environnement proche d'un système anodique microbien auquel est lié le moyen de liaison et qui sont dégradées par les microorganismes compris dans le système anodique microbien. Arrêter la circulation du courant d'électrons circulant dans un moyen de liaison permet également de mesurer la dépolarisation de la structure métallique afin d'évaluer la performance du dispositif de protection cathodique au sens de la norme EN ISO 12696.

Le système de contrôle peut en outre être configuré pour arrêter la circulation d'électrons dans un moyen de liaison reliant un système anodique microbien à la structure métallique à protéger, lorsqu'un seuil prédéterminé d'épuisement de ressources ambiante oxydables qui se trouvent dans l'environnement proche dudit système anodique microbien est atteint et déterminé grâce au système de mesure ou grâce au système de mesure du courant d'électrons circulant dans chaque moyen de liaison et de détermination des variations d'épuisement des ressources ambiantes oxydables qui se trouvent dans l'environnement proche de chaque système anodique microbien.

Grâce au système de mesure du courant d'électrons circulant dans un moyen de liaison ou de mesure du courant d'électrons circulant dans un moyen de liaison et de détermination des variations d'épuisement des ressources ambiantes oxydables, et au système de contrôle, le dispositif de protection cathodique est écologique en ce qu'il respecte l'environnement en évitant d'épuiser les ressource oxydables des sédiments qui sont importantes pour de nombreux organismes et microorganismes vivant dans le milieu électrolytique.

Dans des modes particuliers de réalisation, l'invention répond en outre aux caractéristiques suivantes, mises en oeuvre séparément ou en chacune de leurs combinaisons techniquement opérantes.

Selon un mode de réalisation les microorganismes des systèmes anodiques microbiens sont au moins des microorganismes présents dans le milieu électrolytique et notamment des microorganismes présents dans les sédiments. Les microorganismes peuvent ainsi à partir des réactions d'oxydo-réduction impliquées dans la dégradation de ressources oxydables ambiantes naturellement présentes dans le milieu électrolytique, libérer des électrons qui sont transférés à l'électrode de chaque système anodique microbien. Dans certains modes de réalisation, les microorganismes des systèmes anodiques microbiens comportent des microorganismes présents dans le milieu électrolytique, notamment des microorganismes présents dans les sédiments, et d'autres microorganismes préalablement sélectionnés par l'utilisateur du dispositif de protection cathodique. Ces autres microorganismes sont de préférence sous forme de biofilm de microorganismes. Les microorganismes sont par exemple des bactéries et peuvent être apportés sous forme de biofilm bactérien. Le biofilm est de préférence accolé à l'électrode du système anodique microbien.

Dans des modes de réalisation particuliers de l'invention, au moins un système anodique microbien comprend une chambre comprenant l'électrode et les microorganismes, ladite chambre étant configurée pour recevoir des ressources oxydables qui sont dégradables par les microorganismes du système anodique microbien. Ce mode de réalisation a pour avantage de permettre à un opérateur du dispositif de protection cathodique d'apporter des ressources oxydables dans la chambre pour les microorganismes qu'elle comprend.

Selon des modes de réalisation la chambre est perméable au milieu électrolytique. Dans ces modes de réalisation les microorganismes du système anodique microbien sont au moins ceux présents naturellement dans le milieu électrolytique, particulièrement les sédiments, et la chambre comprend aussi des ressources oxydables ambiantes (oxydation de molécules chimiques) naturellement présentes dans le milieu électrolytique.

Selon un mode de réalisation préféré de la présente invention, le système de mesure du courant d'électrons circulant dans chaque moyen de liaison ou de mesure du courant d'électrons circulant dans chaque moyen de liaison et de détermination des variations d'épuisement des ressources ambiantes oxydables, et le système de contrôle, sont compris dans un appareil de commande du dispositif de protection cathodique.

Dans des modes de réalisation particuliers de l'invention, le courant galvanique de protection est distribué dans la structure métallique à raison d'une densité comprise entre 0,2 mA/m² et 100 mA/m², de préférence entre 0,2 mA/m² et 20 mA/m². Une telle distribution du courant galvanique de protection dans la structure métallique couvre avantageusement le domaine de la prévention cathodique contre la corrosion (0,2 à 2 mA/m²) ainsi que le domaine de la protection cathodique contre la corrosion (2 à 20 mA/m²).

Dans des modes particuliers de réalisation de l'invention, au moins un système anodique microbien est relié à un dispositif de flottaison flottant à la surface du milieu électrolytique. Le fait qu'un système anodique microbien soit relié à un dispositif de flottaison flottant à la surface du milieu électrolytique apporte l'avantage de faciliter l'accès au système anodique microbien pour un gestionnaire de la structure métallique à protéger qui souhaite intervenir sur le système anodique microbien, par exemple, pour en changer les microorganismes ou apporter aux microorganismes présents dans le système anodique microbien de nouvelles ressources oxydables à dégrader ou encore changer le positionnement du système anodique microbien.

Dans des modes de réalisation particuliers de la présente invention le moyen de liaison est un câble comportant au moins un matériau conducteur d'électrons permettant la circulation d'électrons depuis ledit système anodique microbien jusqu'à la structure métallique à protéger. Le câble est de préférence un câble métallique.

La présente invention vise également un procédé de protection cathodique contre la corrosion d'au moins une structure métallique en contact avec un milieu électrolytique comprenant un sol sédimentaire mettant en oeuvre le dispositif de protection cathodique objet de la présente invention et comprenant les étapes suivantes de :
- mise en place de plusieurs systèmes anodiques microbiens, chaque système anodique microbien comprenant une électrode en contact avec le milieu électrolytique et des microorganismes, chaque système anodique microbien étant configuré pour fournir des électrons à son électrode par dégradation de ressources ambiantes oxydables réalisée par lesdits microorganismes, l'électrode de chaque système anodique microbien étant enfouie au moins en partie dans ledit sol sédimentaire du milieu électrolytique et le potentiel électrochimique libre de chaque système anodique microbien étant inférieur au potentiel électrochimique libre du métal de ladite au moins une structure métallique à protéger ;
- liaison de chaque système anodique microbien avec ladite au moins une structure métallique avec au moins un moyen de liaison configuré pour laisser circuler les électrons depuis l'électrode de chaque système anodique microbien jusqu'à ladite au moins une structure métallique ;
- activation alternée dans le temps de la circulation d'électrons entre les électrodes des systèmes anodiques bactériens et ladite au moins une structure métallique.

On entend par activation alternée dans le temps de la circulation d'électrons entre les électrodes des systèmes anodiques bactériens et la structure métallique que la circulation d'électrons dans les moyens de liaison est activée de manière alternée dans le temps (un moyen de liaison après l'autre).

Un avantage d'un tel mode de mise en oeuvre du procédé dans lequel la circulation d'électrons dans les moyens de liaison est activée de manière alternée et donc dans lequel le dispositif de protection cathodique alterne d'un système anodique microbien à l'autre pour se fournir en électrons, est qu'il permet de ne pas épuiser les ressources ambiantes oxydables qui se trouvent dans l'environnement proche de chaque système anodique microbien et laisse le temps à ces ressources ambiantes oxydables de se régénérer lorsqu'un système anodique microbien n'est pas utilisé.

Dans un mode de mise en oeuvre préféré du procédé de protection cathodique, l'étape d'activation alternée comprend les sous-étapes suivantes, de préférence répétées :
- activation de la circulation d'électrons dans au moins un moyen de liaison reliant au moins un système anodique microbien à la structure métallique ;
- arrêt de la circulation d'électrons dans ledit au moins un moyen de liaison reliant ledit au moins un système anodique microbien à la structure métallique lorsque un seuil d'appauvrissement en électrons circulant dans ledit au moins un moyen de liaison est atteint, et activation de la circulation d'électrons dans au moins un moyen de liaison reliant au moins un autre système anodique microbien à la structure métallique.

L'activation de la circulation d'électrons dans au moins un moyen de liaison reliant au moins un autre système anodique microbien à la structure métallique peut par exemple être réalisée quelques minutes ou heures avant que le seuil d'appauvrissement en électrons soit atteint ou lorsque ce dernier est atteint ou après que ce dernier soit atteint.

Le seuil d'appauvrissement en électrons circulant dans ledit moyen de liaison est préalablement déterminé et atteste qu'un certain seuil d'appauvrissement en ressources ambiantes oxydables dans l'environnement proche du système anodique microbien est atteint. Ainsi, l'arrêt de la circulation d'électrons dans ledit moyen de liaison reliant le système anodique microbien à la structure métallique est réalisé lorsqu'un seuil d'appauvrissement en ressources ambiantes oxydables dans l'environnement proche du système anodique microbien est atteint. On entend par environnement proche d'un système anodique microbien un volume d'environnement autour du système anodique microbien dont la composition chimique est susceptible d'être impactée par les réactions électrochimiques et microbiennes à l'interface entre le système anodique microbien et le milieu électrolytique.

### Brève description des figures

L'invention sera mieux comprise à la lecture de la description suivante, donnée à titre d'exemple nullement limitatif, et faite en se référant aux figures qui représentent :
[Fig. 1] la Figure 1 illustre un schéma d'un mode de réalisation du dispositif de protection cathodique objet de la présente invention comprenant deux systèmes anodiques microbiens ;
[Fig. 2] la Figure 2 illustre un schéma d'un mode de réalisation du dispositif de protection cathodique objet de la présente invention comprenant trois systèmes anodiques microbiens ;
[Fig. 3] la Figure 3 illustre un schéma d'un mode de réalisation du dispositif de protection cathodique objet de la présente invention comprenant des interrupteurs sur les moyens de liaison et un système de mesure de façon continue du courant circulant dans chaque moyen de liaison.
[Fig. 4] la Figure 4 représente un dispositif de protection cathodique objet de la présente invention dans lequel la structure métallique à protéger est une pile de pont en béton armé ;
[Fig. 5] la figure 5 illustre le dispositif de protection cathodique représenté en figure 4 avec une courbe de distribution de la densité du courant galvanique de protection en fonction de la hauteur de la structure métallique.

Dans ces figures, des références numériques identiques d'une figure à l'autre désignent des éléments identiques ou analogues. Par ailleurs, pour des raisons de clarté, les dessins ne sont pas à l'échelle, sauf mention contraire.

### Description des modes de réalisation

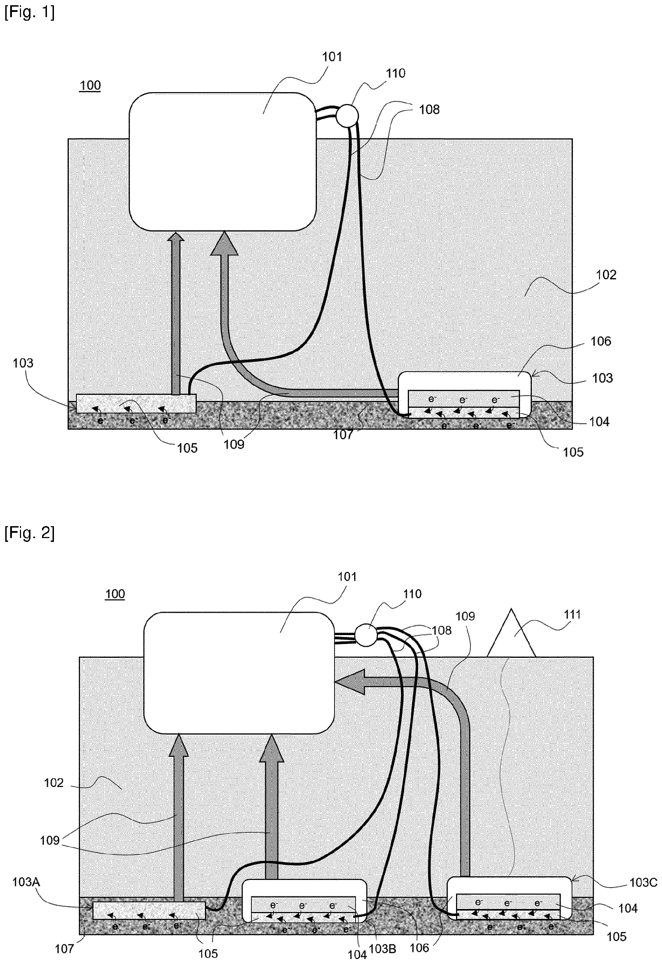

La figure 1 illustre un schéma du dispositif **100** de protection cathodique contre la corrosion d'une structure métallique **101** en contact avec un milieu électrolytique **102** comprenant un sol **107** sédimentaire, selon un mode de réalisation de la présente invention, dans lequel le dispositif 100 de protection cathodique comporte en outre deux systèmes anodiques microbiens **103** disposés au contact du milieu électrolytique 102 et configurés pour fournir des électrons par biodégradation de ressources ambiante oxydables (oxydation de molécules chimiques), le potentiel électrochimique libre de chaque système anodique microbien 103 étant inférieur au potentiel électrochimique libre du métal de la structure métallique 101 à protéger.

Chaque système anodique microbien 103 comporte des microorganismes. Ces microorganismes sont au moins ceux naturellement présents dans le milieu électrolytique 102 et peuvent être complétés par des microorganismes apportés par exemple sous forme d'un biofilm **104** de microorganismes comme présenté en figure 1. Chaque système anodique microbien 103 comporte également une électrode **105** qui joue le rôle d'anode dans le dispositif 100 de protection cathodique. L'électrode 105 est enfouie au moins en partie dans le sol 107 sédimentaire du milieu électrolytique 102 naturel de sorte que les microorganismes que comprend le système anodique microbien 103 sont au moins ceux dudit sol 107. La structure métallique 101 joue quant à elle le rôle de cathode dans le dispositif 100 de protection.

Chaque système anodique microbien 103 est capable de générer de l'électricité de manière autonome à partir de réactions d'oxydation de ressources oxydables ambiantes (molécules chimiques) réalisées par les microorganismes qu'il comporte. En effet, lesdites réactions d'oxydation aboutissent à la libération et au transfert d'électrons à l'électrode 105 que comporte le système anodique microbien 103, générant ainsi un courant électrique dans l'électrode 105.

Le sol 107 sédimentaire d'un milieu électrolytique 102 (en général milieu électrolytique naturel) est composé de microorganismes et de sédiments riches en ressources oxydables représentant un substrat cible de la biodégradation réalisée par les microorganismes pour créer de l'électricité.

Dans certains modes de réalisation, au moins un des systèmes anodiques microbiens 103 comporte une chambre **106** comprenant le biofilm 104 de microorganismes et l'électrode 105. Cette chambre 106 est configurée de sorte que des microorganismes présents dans le biofilm 104 de microorganismes soient en contact avec le milieu électrolytique 102 et de préférence avec le sol 107 sédimentaire. Une telle configuration correspond par exemple au fait que la chambre 106 est perméable au milieu électrolytique 102. La chambre 106 est également configurée pour recevoir des ressources oxydables par les microorganismes du système anodique microbien 103. Cela a pour avantage de permettre à un opérateur du dispositif 100 de protection cathodique d'apporter des ressources oxydables dans la chambre 106 pour alimenter les microorganismes qu'elle comprend en plus des ressources oxydables présentes dans le milieu électrolytique 102 et le sol 107 sédimentaire avec lesquels ils sont en contact.

Le dispositif 100 de protection cathodique comporte en outre un moyen de liaison **108** entre chaque système anodique microbien 103 et la structure métallique 101. Ce moyen de liaison 108 est configuré pour laisser circuler les électrons depuis ledit système anodique microbien 103 jusqu'à la structure métallique 101. Le moyen de liaison 108 comporte bien entendu un matériau conducteur d'électrons par exemple un métal. Le moyen de liaison 108 peut par exemple être un câble comportant une âme conductrice d'électrons. On entend par « un moyen de liaison 108 entre chaque système anodique microbien 103 et la structure métallique 101 » que soit le dispositif 100 de protection cathodique comporte un seul moyen de liaison 108 faisant liaison entre tous les systèmes anodiques microbiens et la structure métallique 101 (non illustré sur les figures) soit que le dispositif 100 de protection cathodique comporte plusieurs moyens de liaison 108, et pour chaque liaison entre un système anodique microbien 103 et la structure métallique 101, un moyen de liaison 108 unique distinct est utilisé (comme illustré sur les figures).

Le moyen de liaison 108 est en contact avec l'électrode 105. Les électrons provenant de la dégradation par oxydation des molécules chimiques (ressources ambiantes oxydables) présentes dans le milieu électrolytique 102 et notamment les sédiments qui est réalisée par les microorganismes du système anodique microbien 103 sont transférés à l'électrode 105. Les électrons passent ensuite de l'électrode 105 au moyen de liaison 108 et circulent dans ledit moyen de liaison 108 pour aller dans la structure métallique 101.

Un courant galvanique **109** de protection est ainsi créé à travers le milieu électrolytique 102 entre chaque système anodique microbien 103 et la structure métallique 101. Ce courant galvanique 109 protège avantageusement la structure métallique 101 contre la corrosion.

L'alimentation d'un dispositif de protection cathodique par courant biogalvanique, si elle est employée sans discernement, peut conduire à l'épuisement de ressources ambiantes oxydables. Une insuffisance de courant ne permettrait pas une protection de l'ouvrage contre la corrosion ; inversement un excès de courant peut entraîner un inutile épuisement de la ressource microbienne. La présente invention permet avantageusement de contrôler le courant débité par une ou une pluralité de systèmes anodiques microbiens.

Le dispositif 100 de protection cathodique illustré en figure 1 comporte également un appareil de commande **110** comprenant un système de mesure du courant d'électrons circulant dans le moyen de liaison 108 ou de mesure du courant d'électrons circulant dans chaque moyen de liaison et de détermination des variations d'épuisement des ressources ambiantes oxydables, ainsi qu'un système de contrôle permettant d'arrêter et activer la circulation du courant d'électrons circulant dans le moyen de liaison 108. Après avoir arrêté la circulation du courant d'électrons grâce au système de contrôle, un opérateur du dispositif 100 de protection cathodique pourra à l'aide du système de mesure avantageusement mesurer la dépolarisation de la structure métallique afin d'évaluer la performance du dispositif de protection cathodique au sens de la norme EN ISO 12696.

Le nombre exact de systèmes anodiques microbiens est calculé en fonction de la cinétique de régénération des ressources ambiantes oxydables. Le pilotage du dispositif de protection cathodique (alternance de fonctionnement entre les systèmes anodiques microbiens) est basé sur deux éléments qui sont le respect des critères normatifs de performance (potentiel à courant coupé et dépolarisation) et le respect d'un critère de courant (seuil prédéterminé à ne pas dépasser) en prévision d'un épuisement des ressources ambiantes oxydables (anticipation du non-respect des critères normatif).

Selon un mode de réalisation de la présente invention, illustré en figure 2, le dispositif 100 de protection cathodique comporte plusieurs systèmes anodiques microbiens 103 au contact du milieu électrolytique 102, de préférence au moins trois. Un premier système anodique microbien 103A ne comporte pas de chambre 106 tandis qu'un deuxième système anodique microbien 103B et un troisième système anodique microbien 103C comportent une chambre 106 comprenant des microorganismes de préférence sous forme de biofilm 104 de microorganismes et une électrode 105. Le dispositif 100 de protection cathodique comprend un moyen de liaison 108 entre chaque système anodique microbien 103 et ladite structure métallique 101, ledit moyen de liaison 108 étant configuré pour laisser circuler les électrons depuis l'électrode 105 du système anodique microbien 103 qu'il relie à la structure métallique 101 jusqu'à cette dernière. Chaque moyen de liaison 108 est en contact avec l'électrode 105 du système anodique microbien 103 qu'il relie à la structure métallique 101.

Un courant galvanique 109 de protection est ainsi créé à travers le milieu électrolytique 102 entre chaque système anodique microbien 103 et la structure métallique 101.

Chaque système anodique microbien 103A, 103B, et 103C comprend une électrode 105 enfouie au moins en partie dans le sol 107 sédimentaire du milieu électrolytique 102 de sorte que les microorganismes que comprend les systèmes anodiques microbiens 103 soient au moins ceux dudit milieu électrolytique 102 et notamment ceux des sédiments du sol 107. Le troisième système anodique microbien 103C est relié à un dispositif de flottaison **111** configuré pour flotter dans le milieu électrolytique 102, de préférence à la surface de ce dernier. Un tel dispositif de flottaison 111 peut être par exemple une bouée. Cela a pour avantage de faciliter l'accès au système anodique microbien 103C si un opérateur du dispositif 100 de protection cathodique souhaite y accéder pour effectuer par exemple une opération de maintenance ou un apport en ressources oxydables par les microorganismes ou même un apport en microorganismes, par exemple un remplacement de biofilm 104.

Le dispositif 100 de protection cathodique illustré en figure 2 comprend aussi un appareil de commande 110 comprenant un système de mesure du courant d'électrons circulant dans chaque moyen de liaison 108 ou de mesure du courant d'électrons circulant dans chaque moyen de liaison et de détermination des variations d'épuisement des ressources ambiantes oxydables, ainsi qu'un système de contrôle permettant d'arrêter et activer la circulation du courant d'électrons circulant dans chaque moyen de liaison 108. Ainsi, l'opérateur du dispositif peut mesurer le courant d'électrons circulant dans chaque moyen de liaison 108 et il peut également choisir d'arrêter ou activer ledit courant d'électrons dans chaque moyen de liaison 108, ce qui respectivement stoppe ou active le courant galvanique 109 de protection entre le système anodique 103 et la structure métallique 101 reliés par ledit moyen de liaison 108 dans lequel le courant est arrêté ou activé. Cela permet avantageusement d'activer la circulation de courant dans les moyens de liaison 108 de manière alternée et donc de faire fonctionner le dispositif 100 de protection cathodique en alternant d'un système anodique microbien 103 à l'autre de sorte à ne pas épuiser les ressources ambiantes oxydables qui se trouvent dans l'environnement proche d'un système anodique microbien 103.

Que ce soit les microorganismes présents dans le milieu électrolytique 102, par exemple dans le sol 107 sédimentaire, ou les microorganismes apportés par l'utilisateur dans un système anodique microbien 103, lors du fonctionnement du dispositif 100 de protection cathodique lesdits microorganismes vont progressivement former un biofilm 104 de microorganismes à la surface de l'électrode 105 ce qui se traduit par une augmentation progressive du courant circulant dans le moyen de liaison 108 reliant ladite électrode 105 à la structure métallique 101 jusqu'à une valeur de pic. La consommation locale des ressources ambiantes oxydables du milieu électrolytique 102, notamment les sédiments, réalisée par les microorganismes du système anodique microbien 103, conduit à une baisse du courant circulant dans le moyen de liaison 108 relié à l'électrode 105 dudit système anodique microbien 103. Il est alors pertinent de changer de système anodique microbien 103 via le système de contrôle (par exemple des interrupteurs ou relais commandés électroniquement) dont le pilotage est guidé selon les deux critères cités précédemment (critère normatif de performance et critère de courant en prévision d'un épuisement des ressources ambiantes oxydables). Concernant le critère de courant, il peut s'agir d'une valeur seuil prédéterminée d'appauvrissement en courant (électrons) circulant dans le moyen de liaison 108. Cette valeur seuil est par exemple un pourcentage de diminution du courant circulant dans le moyen de liaison 108 évalué par rapport à la valeur de pic. Lorsque la valeur seuil est atteinte, le système de contrôle arrête la circulation de courant dans le moyen de liaison 108 concerné permettant ainsi l'arrêt du système anodique microbien 103 auquel il est lié et donc le renouvellement naturel des ressources ambiante oxydables qui se trouvent dans l'environnement proche de ce dernier. En parallèle ou en amont, ou encore après, le système de contrôle active la circulation de courant dans un moyen de liaison 108 reliant un autre système anodique microbien 103 à la structure métallique 101 de sorte que la protection cathodique contre la corrosion de cette dernière continue.

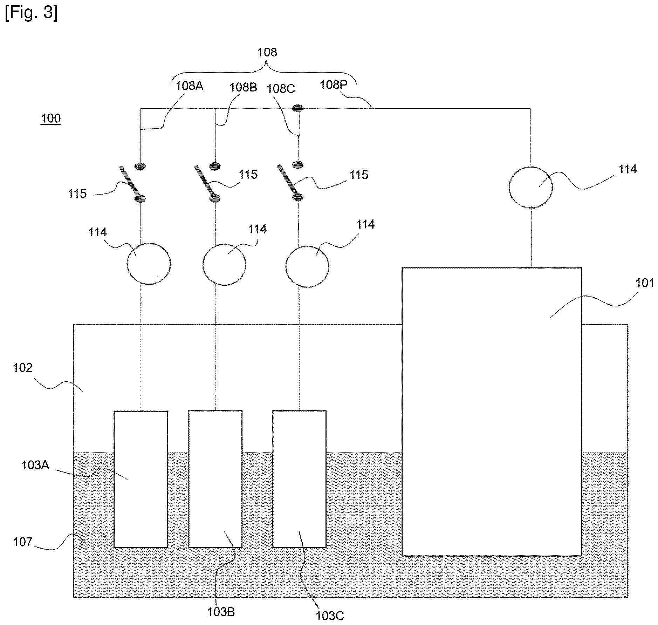

La figure 3 illustre un schéma d'un mode de réalisation du dispositif 100 de protection cathodique objet de la présente invention. Le dispositif 100 de protection comporte plusieurs systèmes anodiques microbiens 103A, 103B et 103C enfouis au moins en partie dans le sol 107 sédimentaire du milieu électrolytique 102. Le dispositif 100 de protection comprend un moyen de liaison 108 comprenant une ligne principale 108P reliée à la structure métallique 101 et comprenant une ligne de raccord 108A, 108B et 108C pour chaque système anodique chaque ligne de raccord étant raccordée à la ligne principale 108P de sorte que chaque système anodique microbien 103 soit relié à la structure métallique 101. Dans ce mode de réalisation le système de mesure du courant d'électrons circulant dans chaque moyen de liaison 108 ou de mesure du courant d'électrons circulant dans chaque moyen de liaison et de détermination des variations d'épuisement des ressources ambiantes oxydables comprend un ampèremètre **114** disposé sur chaque ligne de raccord 108A, 108B et 108C. Il est ainsi possible de mesurer en continu le courant circulant dans chaque ligne de raccord 108A, 108B et 108C, ce qui indique de manière continue le courant débité par chaque système anodique microbien 103 et permet de déterminer le taux d'épuisement des ressources ambiantes oxydables pour chaque système anodique microbien 103. Optionnellement, le système de mesure du courant d'électrons circulant dans chaque moyen de liaison 108 ou de mesure du courant d'électrons circulant dans chaque moyen de liaison et de détermination des variations d'épuisement des ressources ambiantes oxydables comprend également un ampèremètre 114 disposé sur la ligne principale 108P.

Le dispositif 100 de protection comprend un système de contrôle permettant d'arrêter et activer la circulation du courant d'électrons circulant dans le moyen de liaison 108. Le système de contrôle comprend un interrupteur **115** disposé sur chaque ligne de raccord 108A, 108B et 108C. Il est ainsi possible de couper (interruption du passage du courant) et fermer (passage du courant) les interrupteurs 115 de sorte à préserver les systèmes anodiques microbiens 103 les plus faibles et dont les ressources ambiantes oxydables sont en cours d'épuisement et leur permettre une régénération en les mettant au repos. Cela permet également de réguler le courant en activant ou en désactivant certains systèmes anodiques microbiens 103 selon une consigne prédéfinie dans l'intérêt de la protection de la structure métallique 101. Dans une configuration à deux systèmes anodiques microbiens 103, le dispositif 100 de protection permet ainsi d'alterner l'activation et la désactivation des systèmes anodiques microbiens 103. Dans une configuration à plus de deux systèmes anodiques microbiens 103, la possibilité est offerte non seulement de préserver les systèmes anodiques microbiens 103 et les ressources ambiantes oxydables de son environnement proche mais aussi de réguler le courant par quantum d'un système anodique microbien 103.

Optionnellement le système de contrôle peut comprendre à la place des interrupteurs 115 ou en supplément de chaque interrupteur 115, une résistance variable (non illustrées sur les figures) permettant ainsi de faire varier l'intensité du courant parvenant à la structure métallique 101 depuis chaque système anodique microbien 103.

Le système de contrôle et le système de mesure du courant d'électrons circulant dans chaque moyen de liaison 108 ou de mesure du courant d'électrons circulant dans chaque moyen de liaison et de détermination des variations d'épuisement des ressources ambiantes oxydables, peuvent avantageusement être automatisés et confié à un appareil de commande 110 tel qu'un automate programmable ou un ordinateur industriel. Dans ce cas les interrupteurs 115 peuvent être remplacés par des relais programmables et les ampèremètre 114 par des convertisseurs analogiques numériques. Le système de mesure peut notamment comprendre une résistance placée en dérivation (« *shunt »* en terminologie anglosaxonne) sur chaque ligne de raccord 108A, 108B et 108C de sorte à mesurer l'intensité du courant dans chacune de ces lignes de raccord.

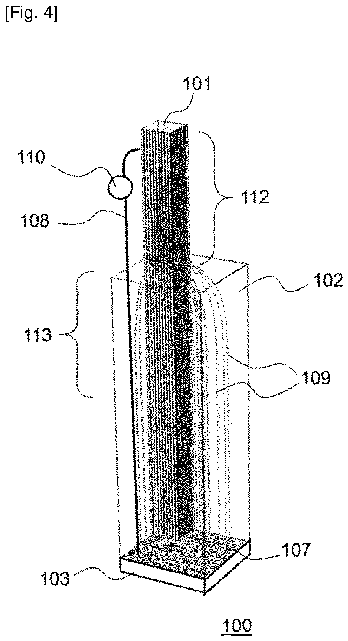

La protection cathodique obtenue avec la présente invention a été testée avec un mode particulier de réalisation de l'invention, donné ici à titre illustratif et non limitatif. Il s'agit d'un dispositif 100 de protection cathodique selon l'invention utilisé pour la protection d'une structure métallique 101 qui est une pile de pont en béton armé en contact avec un milieu électrolytique 102, qui est un milieu marin, comprenant un sol 107 sédimentaire. Cette pile de pont est un élément de béton de 25 m de hauteur, de section 3x3 m² et armé de 76 armatures d'acier longitudinales de 32 mm de diamètre (figure 4). La structure métallique 101 est immergée dans l'eau de mer (milieu électrolytique 102) sur une profondeur de l'ordre de 18 m et repose sur un fond marin (sol 107 sédimentaire) constitué de sédiments riches en ressources oxydables pour les microorganismes des systèmes anodiques microbiens 103, un seul de ces derniers étant représenté sur la figure 4. Dans ce type de configuration, la zone de béton atmosphérique ou zone émergée **112** est sujette aux niveaux d'endommagement les plus importants, du fait d'une contamination forte par les chlorures, d'un béton partiellement saturé en eau et d'une forte disponibilité en dioxygène. Cette zone constitue la cible prioritaire du dispositif 100 de protection cathodique. La zone de marnage **113** qui est une zone partiellement immergée et partiellement émergée du fait de la différence du niveau de l'eau en fonction des marées, descend jusqu'à quelques mètres en dessous du niveau de l'eau (jusqu'à environ 3 à 7 mètres en dessous du niveau de l'eau). La zone de marnage 113 est également une zone sujette à de fort niveaux d'endommagement. Cette vulnérabilité de la zone de marnage est liée à la problématique de l'interface eau/air avec une forte disponibilité en oxygène dont la réduction est impliquée dans le phénomène de corrosion. Le reste de la structure métallique 101 immergée plus en profondeur est très peu sujet à la corrosion du fait de la très faible teneur ou absence d'oxygène dans le milieu électrolytique 102.

Un des systèmes anodiques microbiens 103 est positionné au pied de la structure métallique 101, à 18m de profondeur, enfoui dans la couche sédimentaire et relié au réseau d'armatures en acier de la pile de pont par le biais d'un moyen de liaison 108 qui est ici un câble électrique.

On observe les lignes de courant galvanique 109 de protection (en gris clair) sur la figure 4, échangées naturellement entre le système anodique microbien 103 et le réseau d'armatures en acier de la pile de pont en béton armé. On note que, du fait de l'absence d'oxygène en profondeur, les lignes de courant galvanique 109 remontent à la verticale et entrent dans le béton près de la surface de l'eau.

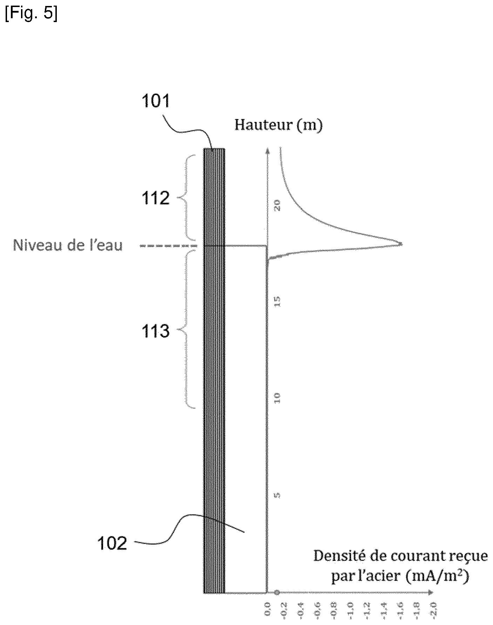

La figure 5, illustre la distribution du courant galvanique 109 de protection en fonction de la hauteur dans la pile de pont. Pour les raisons évoquées ci-dessus, on observe que le courant de protection tend à se concentrer dans les zones riches en oxygène, qui correspondent également aux zones émergée 112 et de marnage 113, prioritaires à protéger.

Le test a été reproduit avec diverses profondeurs pour le positionnement du système anodique microbien 103, sans impact significatif sur la quantité et la distribution du courant galvanique 109 de protection vers les zones émergée 112 et de marnage 113 prioritaires à protégées.

De manière plus générale, il est à noter que les modes de mise en oeuvre et de réalisation de l'invention considérés ci-dessus ont été décrits à titre d'exemples non limitatifs et que d'autres variantes dans la portée définie par les revendications sont par conséquent envisageables.

## Revendications

1. Dispositif de protection cathodique contre la corrosion d'au moins une structure métallique en contact avec un milieu électrolytique comprenant un sol sédimentaire, ledit dispositif de protection s'affranchissant de métal sacrificiel et de moyens de connexion à un réseau de distribution électrique, ledit dispositif de protection comportant:
- au moins deux systèmes anodiques microbiens comprenant chacun des microorganismes et une électrode configurée pour être en contact avec lesdits microorganismes et ledit milieu électrolytique, lesdits microorganismes ayant la capacité de fournir des électrons à l'électrode par dégradation de ressources ambiantes oxydables suivant des réactions d'oxydo-réduction, l'électrode de chaque système anodique microbien étant configurée pour être enfouie au moins en partie dans ledit sol sédimentaire du milieu électrolytique et le potentiel électrochimique libre de chaque système anodique microbien étant inférieur au potentiel électrochimique libre du métal de ladite au moins une structure métallique à protéger ;
- au moins un moyen de liaison configuré pour lier chaque système anodique microbien à ladite au moins une structure métallique et configuré pour laisser circuler les électrons depuis l'électrode de chaque système anodique microbien jusqu'à ladite au moins une structure métallique ;
de sorte qu'un courant galvanique de protection s'applique à travers le milieu électrolytique depuis au moins un des systèmes anodiques microbiens jusqu'à ladite au moins une structure métallique lorsque ledit au moins un système anodique microbien est en contact avec ledit milieu électrolytique et est lié par ledit au moins un moyen de liaison à ladite au moins une structure métallique, ledit dispositif de protection étant **caractérisé en ce qu'**il comporte en outre :
∘ un système de mesure du courant d'électrons circulant dans chaque moyen de liaison permettant de connaitre les variations d'épuisement des ressources ambiantes oxydables qui se trouvent dans l'environnement proche du système anodique microbien auquel le moyen de liaison est lié,
∘ un système de contrôle permettant d'arrêter et activer la circulation du courant d'électrons circulant dans chaque moyen de liaison.

2. Dispositif de protection selon la revendication 1, dans lequel les microorganismes du système anodique microbien sont au moins des microorganismes présents dans le milieu électrolytique.

3. Dispositif de protection selon l'une quelconque des revendications 1 à 2, dans lequel au moins un système anodique microbien comprend une chambre comprenant l'électrode et les microorganismes, ladite chambre étant configurée pour recevoir des ressources oxydables qui sont dégradables par les microorganismes du système anodique microbien.

4. Dispositif de protection selon l'une quelconque des revendications 1 à 3, dans lequel le courant galvanique de protection est distribué dans la structure métallique à raison d'une densité comprise entre 0,2 mA/m² et 100 mA/m², de préférence entre 0,2 mA/m² et 20 mA/m².

5. Dispositif de protection selon l'une quelconque des revendications 1 à 4, dans lequel au moins un système anodique microbien est relié à un dispositif de flottaison flottant à la surface du milieu électrolytique.

6. Procédé de protection cathodique contre la corrosion d'au moins une structure métallique en contact avec un milieu électrolytique mettant en oeuvre le dispositif de protection cathodique selon l'une quelconque des revendications 1 à 5 et comprenant les étapes suivantes de :
- mise en place de plusieurs systèmes anodiques microbiens comprenant chacun des microorganismes et une électrode en contact avec lesdits microorganismes et le milieu électrolytique, le système anodique microbien étant configuré pour fournir des électrons à l'électrode par dégradation de ressources ambiantes oxydables réalisée par lesdits microorganismes, l'électrode de chaque système anodique microbien étant enfouie au moins en partie dans ledit sol sédimentaire du milieu électrolytique et le potentiel électrochimique libre dudit système anodique microbien étant inférieur au potentiel électrochimique libre du métal de ladite au moins une structure métallique à protéger ;
- liaison de ladite au moins une structure métallique avec chaque système anodique microbien avec au moins un moyen de liaison configuré pour laisser circuler les électrons depuis l'électrode de chaque système anodique microbien jusqu'à ladite au moins une structure métallique ;
- activation alternée dans le temps de la circulation d'électrons entre chaque électrode de systèmes anodiques bactériens et ladite au moins une structure métallique comprenant les sous-étapes de :
∘ activation de la circulation d'électrons dans au moins un moyen de liaison reliant au moins un système anodique microbien à la structure métallique de sorte qu'un courant galvanique de protection s'applique à travers le milieu électrolytique depuis ledit au moins un système anodique microbien jusqu'à ladite au moins une structure métallique ;
∘ arrêt de la circulation d'électrons dans ledit au moins un moyen de liaison reliant au moins un système anodique microbien à la structure métallique lorsqu'est atteint un seuil préalablement déterminé d'appauvrissement en électrons circulant dans ledit au moins un moyen de liaison ledit seuil préalablement déterminé attestant d'un seuil d'appauvrissement en ressources ambiantes oxydables dans l'environnement proche dudit au moins un système anodique microbien, et activation de la circulation d'électrons dans au moins un moyen de liaison reliant au moins un autre système anodique microbien à la structure métallique.

## Patentansprüche

1. Gerät zum kathodischen Korrosionsschutz mindestens einer Metallstruktur in Kontakt mit einem elektrolytischen Medium, das einen sedimentären Boden umfasst, wobei das Schutzgerät kein Opfermetall und keine Verbindungsmittel zu einem elektrischen Verteilungsnetz umfasst, das Schutzgerät umfassend:
- mindestens zwei mikrobielle Anodensysteme, die jeweils Mikroorganismen und eine Elektrode umfassen, die so konfiguriert ist, dass sie mit den Mikroorganismen und dem elektrolytischen Medium in Kontakt steht, wobei die Mikroorganismen die Fähigkeit aufweisen, durch Abbau oxidierbarer Umgebungsressourcen in Redoxreaktionen Elektronen an die Elektrode zu liefern, die Elektrode jedes mikrobiellen Anodensystems so konfiguriert ist, dass sie mindestens teilweise in dem sedimentären Boden des elektrolytischen Mediums vergraben ist, und das freie elektrochemische Potential jedes mikrobiellen Anodensystems niedriger ist als das freie elektrochemische Potential des Metalls der mindestens einen zu schützenden Metallstruktur;
- mindestens ein Verbindungsmittel, das so konfiguriert ist, dass es jedes mikrobielle Anodensystem mit der mindestens einen Metallstruktur verbindet und so konfiguriert ist, dass es Elektronen von der Elektrode jedes mikrobielle Anodensystems zu der mindestens einen Metallstruktur fließen lässt;
sodass ein galvanischer Schutzstrom durch das elektrolytische Medium von mindestens einem der mikrobiellen Anodensysteme zu der mindestens einen Metallstruktur fließt, wenn das mindestens eine mikrobielle Anodensystem in Kontakt mit dem elektrolytischen Medium ist und durch das mindestens eine Verbindungsmittel mit der mindestens einen Metallstruktur verbunden ist, wobei das Schutzgerät **dadurch gekennzeichnet ist, dass** es ferner Folgendes umfasst:
∘ ein System zur Messung des Elektronenstroms, der durch jedes Verbindungsmittel fließt, wodurch die Schwankungen der Erschöpfung der oxidierbaren Umgebungsressourcen bekannt werden, die sich in der näheren Umgebung des mikrobiellen Anodensystems befinden, an das das Verbindungsmittel gebunden ist,
∘ ein Kontrollsystem zum Anhalten und Aktivieren des Elektronenstroms, der durch jedes Verbindungsmittel fließt.

2. Schutzgerät nach Anspruch 1, wobei die Mikroorganismen des mikrobiellen Anodensystems mindestens Mikroorganismen sind, die in dem elektrolytischen Medium vorhanden sind.

3. Schutzgerät nach einem der Ansprüche 1 bis 2, wobei mindestens ein mikrobielles Anodensystem eine Kammer umfasst, die die Elektrode und die Mikroorganismen umfasst, wobei die Kammer so konfiguriert ist, dass sie oxidierbare Ressourcen aufnimmt, die durch die Mikroorganismen des mikrobiellen Anodensystems abbaubar sind.

4. Schutzgerät nach einem der Ansprüche 1 bis 3, wobei der galvanische Schutzstrom in der Metallstruktur mit einer Dichte zwischen 0,2 mA/m² und 100 mA/m², vorzugsweise zwischen 0,2 mA/m² und 20 mA/m², verteilt wird.

5. Schutzgerät nach einem der Ansprüche 1 bis 4, wobei mindestens ein mikrobielles Anodensystem mit einem Flotationsgerät verbunden ist, das auf der Oberfläche des elektrolytischen Mediums schwimmt.

6. Verfahren zum kathodischen Schutz gegen Korrosion von mindestens einer Metallstruktur in Kontakt mit einem elektrolytischen Medium unter Verwendung des kathodischen Schutzgeräts nach einem der Ansprüche 1 bis 5 und umfassend die folgenden Schritte:
- Einrichten von mehreren mikrobiellen Anodensystemen bestehend aus Mikroorganismen und eine Elektrode, die mit den Mikroorganismen und dem elektrolytischen Medium in Kontakt steht, wobei das mikrobielle Anodensystem so konfiguriert ist, dass es durch den Abbau oxidierbarer Umgebungsressourcen durch die Mikroorganismen Elektronen an die Elektrode liefert, wobei die Elektrode jedes mikrobielle Anodensystems mindestens teilweise in dem sedimentären Boden des elektrolytischen Mediums vergraben ist und das freie elektrochemische Potential des mikrobielle Anodensystems niedriger ist als das freie elektrochemische Potential des Metalls der mindestens einen zu schützenden Metallstruktur;
- Verbinden der mindestens einen Metallstruktur mit jedem mikrobiellen Anodensystem mit mindestens einem Verbindungsmittel, das so konfiguriert ist, dass es Elektronen von der Elektrode jedes mikrobiellen Anodensystems zu der mindestens einen Metallstruktur fließen lässt;
- zeitlich alternierendes Aktivieren des Elektronenflusses zwischen jeder Elektrode des bakteriellen Anodensystems und der mindestens einen Metallstruktur, umfassend die Teilschritte:
∘ Aktivieren des Elektronenflusses in mindestens einem Verbindungsmittel, das mindestens ein mikrobielles Anodensystem mit der Metallstruktur verbindet, sodass ein schützender galvanischer Strom durch das elektrolytische Medium von dem mindestens einen mikrobiellen Anodensystem zu der mindestens einen Metallstruktur fließt;
∘ Anhalten des Elektronenflusses in dem mindestens einen Verbindungsmittel, das mindestens ein mikrobielles Anodensystem mit der Metallstruktur verbindet, wenn ein vorbestimmter Schwellenwert der Verarmung an Elektronen, die in dem mindestens einen Verbindungsmittel fließen, erreicht wird, wobei der vorbestimmte Schwellenwert einen Schwellenwert der Verarmung an oxidierbaren Umgebungsressourcen in der nahen Umgebung des mindestens einen mikrobiellen Anodensystems belegt, und Aktivieren des Elektronenflusses in mindestens einem Verbindungsmittel, das mindestens ein weiteres mikrobielles Anodensystem mit der Metallstruktur verbindet.

## Claims

1. A device for cathodic protection against corrosion of at least one metal structure in contact with an electrolytic medium comprising a sedimentary soil, said protective device dispensing with the need for a sacrificial metal and means for connection to an electrical distribution network, said protection device including:
- at least two microbial anode systems each comprising microorganisms and an electrode configured to be in contact with said microorganisms and said electrolytic medium, said microorganisms having the ability to supply electrons to the electrode by degradation of oxidizable ambient resources following oxidation-reduction reactions, the electrode of each microbial anode system being configured to be buried at least partially in said sedimentary soil of the electrolytic medium and the free electrochemical potential of each microbial anode system being lower than the free electrochemical potential of the metal of said at least one metal structure to be protected;
- at least one connecting means configured to connect each microbial anode system to said at least one metal structure and configured to let the electrons circulate from the electrode of each microbial anode system up to said at least one metal structure;
so that a protective galvanic current is applied through the electrolytic medium from at least one of the microbial anode systems up to said at least one metal structure when said at least one microbial anode system is in contact with said electrolytic medium and is connected by said at least one connecting means to said at least one metal structure, said protection device being **characterized in that** it further includes:
∘ a system for measuring the current of electrons circulating in each connecting means allowing determining the variations in depletion of the oxidizable ambient resources which are in the environment close to the microbial anode system to which the connecting means is connected,
∘ a control system allowing stopping and activating the circulation of the current of electrons circulating in each connecting means.

2. The protection device according to claim 1, wherein the microorganisms of the microbial anode system are at least microorganisms present in the electrolytic medium.

3. The protection device according to any one of claims 1 to 2, wherein at least one microbial anode system comprises a chamber comprising the electrode and the microorganisms, said chamber being configured to receive oxidizable resources which are degradable by the microorganisms of the microbial anode system.

4. The protection device according to any one of claims 1 to 3, wherein the protective galvanic current is distributed in the metal structure at a density comprised between 0.2 mA/m² and 100 mA/m², preferably between 0.2 mA/m² and 20 mA/m².

5. The protection device according to any one of claims 1 to 4, wherein at least one microbial anode system is connected to a flotation device floating at the surface of the electrolytic medium.

6. A method of cathodic protection against corrosion of at least one metal structure in contact with an electrolytic medium implementing the cathodic protection device according to any one of claims 1 to 5 and comprising the following steps of:
- setting up several microbial anode systems each comprising microorganisms and an electrode in contact with said microorganisms and the electrolytic medium, the microbial anode system being configured to supply electrons to the electrode by degradation of oxidizable ambient resources carried out by said microorganisms, the electrode of each microbial anode system being buried at least partially in said sedimentary soil of the electrolytic medium and the free electrochemical potential of said microbial anode system being lower than the free electrochemical potential of the metal of said at least one metal structure to be protected;
- connecting said at least one metal structure with each microbial anode system with at least one connecting means configured to let the electrons circulate from the electrode of each microbial anode system up to said at least one metal structure;
- activating the circulation of electrons alternately over time between each electrode of bacterial anode systems and said at least one metal structure comprising the sub-steps of:
∘ activating the circulation of electrons in at least one connecting means connecting at least one microbial anode system to the metal structure so that a protective galvanic current is applied through the electrolytic medium from said at least one microbial anode system up to said at least one metal structure;
∘ stopping the circulation of electrons in said at least one connecting means connecting at least one microbial anode system to the metal structure when a previously determined threshold of depletion of electrons circulating in said at least one connecting means is reached, said previously determined threshold reflecting a threshold of depletion in oxidizable ambient resources in the environment close to said at least one microbial anode system, and activating the circulation of electrons in at least one connecting means connecting at least one other microbial anode system to the metal structure.
